Europäisches Patentamt

European Patent Office

Office européen des brevets

(11) Numéro de publication: **0 351 326**
**A1**

## (12) DEMANDE DE BREVET EUROPEEN

(21) Numéro de dépôt: 89420235.7

(22) Date de dépôt: 30.06.89

(51) Int. Cl.⁵: **E 05 D 11/10**
**G 02 C 5/22**

(30) Priorité: 11.07.88 FR 8809843

(43) Date de publication de la demande:
17.01.90 Bulletin 90/03

(84) Etats contractants désignés:
AT BE CH DE ES FR GB GR IT LI LU NL SE

(71) Demandeur: **Piard, Gérard**
**Champied Pratz**
**F-39170 Saint Lupicin (FR)**

(72) Inventeur: **Piard, Gérard**
**Champied Pratz**
**F-39170 Saint Lupicin (FR)**

(74) Mandataire: **Maureau, Pierre et al**
**Cabinet GERMAIN & MAUREAU B.P. 3011**
**F-69392 Lyon Cédex 03 (FR)**

(54) **Charnière.**

(57) Cette charnière est du type comportant deux éléments (2,3) articulés l'un à l'autre dont l'un (2) constitue au moins une chape (5), supportant l'axe d'articulation (4) et dont l'autre (3) constitue au moins un moyeu (6) engagé sur l'axe (4) supporté par la chape (5), chaque palier (5a) de la chape (5) et chaque moyeu (6) étant relié, par un tenon (7,8), à une patte de charnière (2a,3a).

Les moyeux (6) et les paliers (5a) de ses deux éléments (3,2) sont logés dans un carter cylindrique (9) en matière élastique telle qu'un métal ou toute autre matière appropriée, comme une matière plastique ou autre similaire, lié en rotation aux paliers (5a) de chaque chape (5) et dans la paroi duquel est ménagée une fente longitudinale (13) disposée parallèlement à l'axe (4) de la charnière, destinée à laisser passer les tenons (7,8) des deux éléments (2,3) de la charnière, et dont la largeur est déterminée, au moins en correspondance du tenon (8) de chaque moyeu (6), en fonction de l'angle d'ouverture maximum désiré.

FIG.1

**Description**

## CHARNIERE

La présente invention concerne une charnière et notamment, quoique non exclusivement, une charnière pour branches de lunettes.

Une charnière comprend généralement deux éléments articulés l'un à l'autre dont l'un constitue au moins une chape supportant l'axe d'articulation et dont l'autre constitue au moins un moyeu engagé sur l'axe supporté par la chape, chaque palier de la chape et chaque moyeu étant relié, par un tenon, à une patte de charnière.

Dans ce type de charnière, il est rarement prevu de procurer, a l'angle d'ouverture maximale, une élasticité autre que celle inhérente à la matière constitutive de l'organe solidaire de l'un des éléments de la charnière tel que la branche s'il s'agit d'une charnière pour lunettes.

En outre, il est rarement prévu, non seulement dans les charnières destinées a l'articulation des branches de lunettes mais aussi dans celles destinées à d'autres articulations telles que celles des portières d'automobiles ou encore des portes de meubles, et plus particulièrement de meubles de cuisines, des moyens tendant à maintenir élastiquement les deux éléments de la charnière en position de fermeture c'est-à-dire dans la position correspondant a l'angle minimum. Ces moyens sont généralement constitués par un piston souvent formé par une bille, logé dans un évidement de l'un des éléments de la charnière et constamment poussé par un ressort contre un profil en forme de came ménagé sur l'autre élément de cette charnière.

On conçoit aisément que de tels moyens sont d'un prix de revient élevé en raison de leur constitution et des opérations rendues nécessaires par leur mise en place et leur prix de revient est d'autant plus élevé que leurs pièces constitutives sont de petite dimension ce qui est évidemment le cas lorsqu'il s'agit de charnières pour branches de lunettes.

La présente invention vise à remédier à tous ces inconvénients. A cet effet, les moyeux et les paliers de ses deux éléments sont logés dans un carter cylindrique en matière appropriée, comme une matière plastique ou autre similaire, lié en rotation aux paliers de chaque chape et dans la paroi duquel est ménagée une fente longitudinale disposée parallèlement à l'axe de la charnière, destinée à laisser passer les tenons des deux éléments de la charnière et dont la largeur est déterminée, au moins en correspondance du tenon de chaque moyeu, en fonction de l'angle d'ouverture maximum désiré.

Ce carter limite donc élastiquement l'ouverture des éléments de cette charnière à l'angle maximum désiré.

Si l'on souhaite procurer à cette charnière un maintien élastique dans l'une ou l'autre de plusieurs positions angulaires déterminées, suivant une forme d'exécution de cette charnière, de part et d'autre du tenon correspondant, le contour des paliers est circulaire et, de part et d'autre de sa fente longitudinale, la section transversale intérieure du carter est circulaire et de même rayon que les paliers de manière à les épouser parfaitement, le carter présentant, de préférence au voisinage de l'un des bords de sa fente, un bossage longitudinal et chaque palier présentant, dans la même position angulaire que le bossage du carter, une encoche apte à loger le tronçon Correspondant du bossage, tandis que chaque moyeu possède un périmètre extérieurcirculaire de même rayon que les paliers mais présentant une pluralité d'encoches aptes à être engagées, l'une après l'autre, au choix de l'utilisateur, sur le tronçon correspondant du bossage du carter.

Suivant une variante d'exécution de cette charnière, le contour extérieur des paliers est polygonal et le carter cylindrique présente un alésage dont la section transversale est sensiblement égale à ce contour extérieur tandis que le contour extérieur de chaque moyeu présente au moins un bossage dont la trajectoire circulaire n'est pas entièrement inscrite dans l'alésage du carter et dont chacun est positionné angulairement de manière que le point de sa trajectoire le plus saillant à l'extérieur du carter soit situé entre deux positions angulaires stables voisines.

Ainsi, le pivotement de ce moyeu dans le sens correspondant à l'ouverture des éléments de charnière provoque inévitablement une déformation élastique passagère du carter qui tend à le ramener normalement en position de fermeture à l'angle minimum de la charnière, du moins tant que n'est pas dépassé un seuil de pivotement du moyeu.

De préférence, le bossage de chaque moyeu est déterminé en dimension et en position angulaire de manière qu'en position de fermeture de la charnière, il soit en contact, au moins sous une légère pression, avec l'une des faces du carter.

Suivant une forme d'exécution intéressante de l'invention, la fente du carter présente, le long d'au moins l'un de ses bords et en coïncidence de chaque tenon de moyeu, une encoche orthogonale à l'axe de la charnière et dont le fond sert de butée de limitation d'ouverture au tenon précité.

Cette disposition permet d'éviter une expulsion intempestive du carter par suite d'une ouverture de la charnière à un angle exagéré car les dents subsistant entre les encoches du carter lui permettent d'embrasser suffisamment la chape pour éliminer ce risque.

La simplicité de la constitution et par conséquent du montage de cette charnière permet de la réaliser, quelles qu'en soient les dimensions, à très faible coût.

De toute façon, l'invention sera bien comprise à l'aide de la description qui suit, en référence au dessin schématique annexé représentant, à titre d'exemple non limitatif, une forme d'exécution de cette charnière :

    Figure 1 en est une vue en perspective éclatée ;

    Figure 2 est une vue en coupe transversale suivant II-II de figure 1 de cette charnière à l'état monté, en position d'ouverture maximale ;

Figure 3 est une vue en coupe similaire à figure 2 montrant la charnière en position de dépassement élastique de son angle d'ouverture maximum normal ;

Figures 4 et 5 sont des vues similaires à figure 2 montrant cette charnière, respectivement en position de fermeture et en position intermédiaire entre ses positions d'ouverture et de fermeture ;

Figure 6 est une vue en perspective éclatée montrant une variante d'exécution de cette charnière ;

Figure 7 est une vue en coupe transversale de la charnière de figure 6, illustrant son mode de fonctionnement.

Cette charnière est du type comportant deux éléments 2 et 3 articulés l'un à l'autre par l'intermédiaire d'un axe d'articulation 4. L'élément 2, qui est destiné à constituer au moins une chape, comprend, dans cet exemple, trois chapes 5, dont chacun comporte deux paliers 5a destinés à supporter l'axe d'articulation 4, deux de ces paliers étant communs à deux chapes voisines. L'élément 3, qui est destiné à constituer au moins un moyeu engageable sur l'axe 4, présente, dans cet exemple, trois moyeux 6 dont chacun est destiné à être engagé sur l'axe 4 entre les deux paliers 5a d'une chape 5. Chaque élément 2 et 3 de cette charnière comporte également une patte, respectivement 2a et 3a, destinée à être fixée à l'organe, tel qu'une monture de lunettes et l'une de ses branches.

Chaque palier 5a des chapes 5 de l'élément 2 est relié à la patte de charnière 2a par un tenon 7 et chaque moyeu 6 de l'élément 3 est relié à la patte de charnière 3a par un tenon 8.

Comme le montre le dessin, chaque palier 5a des chapes 5 de l'élément 2 présente un contour extérieur sensiblement rectangulaire. Après montage, c'est-à-dire après engagement des moyeux 6 entre les paliers 5 et mise en place de l'axe 4, l'ensemble est coiffé par un carter 9 dont l'alésage présente, comme le montre le dessin, une section transversale sensiblement égale au contour périphérique des paliers 5a des chapes 5. Cette disposition procure au carter 9 et à l'élément 2 de la charnière une liaison en rotation éliminant toute possibilité de mouvement relatif de l'un par rapport à l'autre autour de l'axe 4. En outre, le carter 9 peut être fermé à l'une ou à chacune de ses extrémités par une cloison transversale 11 dont au moins l'une présente un trou central 12 permettant l'introduction de l'axe 4 après mise en place des éléments 2 et 3 de la charnière.

Le carter 9 présente une fente longitudinale 13 prévue pour le passage des tenons 7 de l'élément 2. L'un 13a des bords de cette fente 13 est lisse et est destiné à être constamment en appui sur la face externe des tenons 7 de l'élément 2 de la charnière.

Le bord opposé au bord 13a de la fente longitudinale 13 présente des encoches périphériques 14, orientées orthogonalement à l'axe 4, dont le nombre est égal à celui des tenons 8 de l'élément 3 et dont chacune est destinée à livrer passage à l'un de ces tenons 8.

Le carter 9 est réalisé en un matériau élastique tel qu'en acier ou toute autre matière appropriée comme une matière plastique ou autre similaire. Il résulte de cette élasticité qu'un pivotement de l'élément 3 de la charnière dans le sens de son ouverture, c'est-à-dire dans le sens de la flèche 15, au-delà de la position angulaire dans laquelle les tenons 8 de cet élément entrent en contact avec le fond des encoches 14, est possible. Cette disposition procure donc une certaine élasticité à l'angle d'ouverture maximale des éléments 2 et 3 de la charnière en diminuant de ce fait les risques de sa rupture.

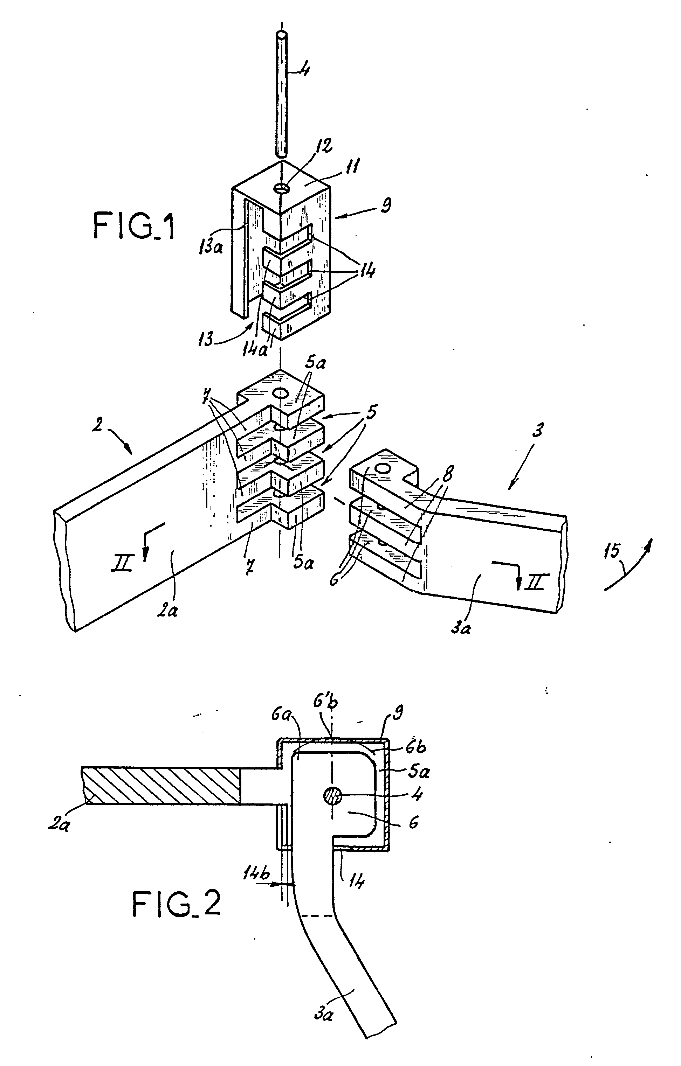

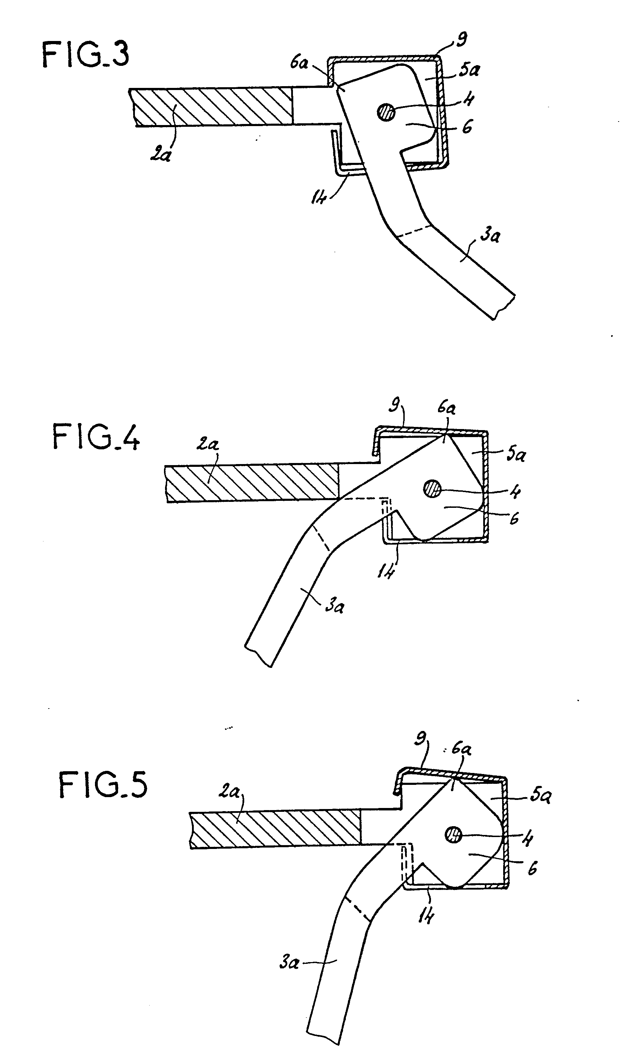

Les encoches 14, ménagées le long de l'un des bords de la fente 13, ont pour but de ménager, entre elles, des dents 14a dont la présence permet au carter d'embrasser suffisamment les paliers 5a des chapes 5 de l'élément 2, même en présence d'une importante déformation élastique du carter 9, pour éviter son éjection. Cependant, comme le montre la figure 2, pour permettre au carter 9 de se déformer élastiquement, il est nécessaire de ménager, entre les dents 14a et la partie correspondante du contour de chaque palier 5a, un jeu 14b que la déformation élastique du carter, après dépassement de l'angle d'ouverture maximum normal illustré sur la figure 2, tend à faire diminuer et même à annuler, comme illustré sur la figure 3.

Comme le montre le dessin et plus particulièrement les figures 2 à 5, le contour périphérique de chaque moyeu 6 de l'élément 3 présente un bossage 6a dont la trajectoire circulaire 6b est saillante à l'extérieur du carter 9 lorsque ce dernier est au repos, comme cela est visible sur la figure 2.

Ce bossage 6a est positionné angulairement sur le moyeu 6 correspondant, de manière que le point 6'b de sa trajectoire 6b le plus éloigné à l'extérieur du carter 9 soit situé entre ses positions extrêmes correspondant, respectivement, à la position fermée (figure 4) et à la position ouverte (figure 2) de la charnière.

En outre, ce bossage 6a est déterminé en dimension et en position angulaire de manière qu'en position de fermeture de la charnière, telle qu'illustrée sur la figure 4, il reçoive une légère pression dirigée radialement vers l'intérieur par la face interne de la paroi du carter 9 avec laquelle il est en contact. Or, dans cette position de fermeture maximale de la charnière, les tenons 8 de l'élément 3 sont en contact avec la patte 2a de l'autre élément 2 de cette charnière. Il en résulte donc que le bossage 6a de chaque moyeu 6 engendre sur la paroi correspondante du carter 9 une déformation élastique qui tend à maintenir constamment l'élément 3 en position de fermeture à l'angle minimum. En effet, le début de pivotement de l'élément 3 dans le sens de l'ouverture de la charnière, c'est-à-dire dans le sens de la flèche 15, tend à augmenter la déformation élastique de la paroi considérée du carter 9, créant de ce fait une augmentation de la résistance au pivotement de ce moyeu jusqu'à ce que le bossage 6a ait atteint le point 6'b de sa trajectoire 6b, après quoi la force élastique exercée sur le bossage 6a par le carter 9 facilite, en l'assistant, la poursuite de la rotation de l'élément 3 jusqu'à ce que soit atteinte la position d'ouverture de la charnière telle qu'illustrée sur la figure 2.

Naturellement, si l'on désire qu'une retenue élastique agisse aussi dans la position d'ouverture à l'angle maximum de la charnière, on peut prévoir, sur chaque moyeu, un second bossage ou encore un bossage unique de profil approprié apte à coopérer avec l'une des parois du carter pour engendrer cette force élastique en position d'ouverture à l'angle maximum de la charnière.

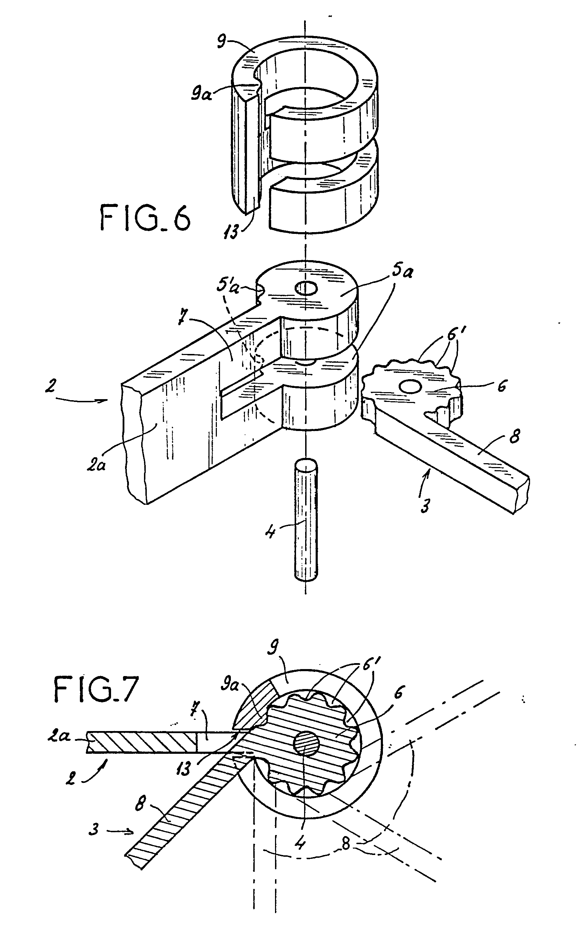

Les figures 6 et 7 illustrent une variante d'exécution de cette charnière.

Dans cette variante, de part et d'autre de chaque tenon 7, le contour extérieur des paliers 5a est circulaire et de part et d'autre de sa fente longitudinale 13, la section transversale intérieure du carter 9 est circulaire et de même rayon que le contour périphérique extérieur des paliers 5a de manière à les épouser parfaitement. En outre, le carter 9 présente, de préférence au voisinage de l'un des bords de la fente 13, un bossage longitudinal 9a et chaque palier 5a présente, dans la même position angulaire que le bossage 9a du carter 9, une encoche 5'a apte à loger le tronçon correspondant du bossage 9a.

Par ailleurs, chaque moyeu 6 possède un périmètre extérieur circulaire de même rayon que celui des paliers 5a mais présentant une pluralité d'encoches 6' aptes à être engagées, l'une après l'autre, au choix de l'utilisateur, sur le tronçon correspondant du bossage 9a du carter 9.

Ainsi, l'utilisateur peut donner à l'élément 3 de cette charnière la position angulaire souhaitée, choisie parmi l'une des différentes positions possibles, dont chacune est déterminée par l'engagement d'une encoche 6' de chaque moyeu 6 sur le bossage 9a du carter 9. Naturellement, comme cela se conçoit aisément, pour engager, sur le bossage 9a du carter 9, une autre encoche 6', il suffit de faire pivoter les tenons 8 des moyeux 6 à l'encontre de la force élastique engendrée par l'engagement du bossage 9a du carter 9 dans l'une des encoches 6' du moyeu 6 considéré. Le nombre des positions angulaires possibles de l'élément 3 de cette charnière est évidemment déterminé par le nombre d'encoches 6' ménagées sur chacun de ses moyeux 6.

## Revendications

1.- Charnière du type comportant deux éléments (2,3) articulés l'un à l'autre dont l'un (2) constitue au moins une chape (5), supportant l'axe d'articulation (4) et dont l'autre (3) constitue au moins un moyeu (6) engagé sur l'axe (4) supporté par la chape (5), chaque palier (5a) de la chape (5) et chaque moyeu (6) étant relié, par un tenon (7,8), à une patte de charnière (2a,3a), **caractérisée en ce que** les moyeux (6) et les paliers (5a) de ses deux éléments (3,2) sont logés dans un carter cylindrique (9) en matière élastique telle qu'un métal ou toute autre matière appropriée,

comme une matière plastique ou autre similaire, lié en rotation aux paliers (5a) de chaque chape (5) et dans la paroi duquel est ménagée une fente longitudinale (13) disposée parallèlement à l'axe (4) de la charnière, destinée à laisser passer les tenons (7,8) des deux éléments (2,3) de la charnière, et dont la largeur est déterminée, au moins en correspondance du tenon (8) de chaque moyeu (6), en fonction de l'angle d'ouverture maximum désiré.

2.- Charnière selon la revendication 1, caractérisée en ce que, de part et d'autre du tenon (7) correspondant, le contour extérieur des paliers (5a) est circulaire et, de part et d'autre de sa fente longitudinale (13), la section transversale intérieure du carter (9) est circulaire et de même rayon que les paliers (5a) de manière à les épouser parfaitement, le carter (9) présentant, de préférence au voisinage de lui des bords de sa fente (13), un bossage longitudinal (9a) et chaque palier (5a) présentant, dans la même position, angulaire que le bossage (9a) du carter (9), une encoche (5'a) apte à loger lv) tronçon correspondant du bossage (9a), tandis que chaque moyeu (6) possède un périmètre extérieur circulaire de même rayon que les paliers (5a) mais présentant une pluralité d'encoches (6') aptes à être engagées, l'une après l'autre, au choix de l'utilisateur, sur le tronçon correspondant du bossage (9a) du carter (9).

3.- Charnière selon la revendication 1, caractérisée en ce que le contour extérieur des paliers (5a) est polygonal et le carter cylindrique (9) présente un alésage dont la section transversale est sensiblement égale à ce contour extérieur tandis que le contour extérieur de chaque moyeu (6) présente au moins un bossage (6a) dont la trajectoire circulaire (6b) n'est pas entièrement inscrite dans l'alésage du carter (9) et dont chacun est positionné angulairement de manière que le point (6'b) de sa trajectoire (6b) le plus saillant à l'extérieur du carter (9) soit situé entre deux positions angulaires stables voisines.

4.- Charnière selon la revendication 3, caractérisée en ce que le bossage (6a) de chaque moyeu (6) est déterminé en dimension et en position angulaire de manière qu'en position de fermeture de la charnière, il soit en contact, au moins sous une légère pression, avec l'une des faces du carter (9).

5.- Charnière selon l'une quelconque des revendications précédentes, caractérisée en ce que la fente (13) du carter (9) présente, le long d'au moins l'un de ses bords et en coïncidence de chaque tenon (8) de moyeu, une encoche (14) orthogonale à l'axe (4) de la charnière et dont le fond sert de butée de limitation d'ouverture au tenon (8) précité.

6.- Charnière selon la revendication 4, caractérisée en ce qu'un jeu (14b) est ménagé entre chaque dent (14a) ménagée entre deux encoches voisines (14) du carter (9) et la partie correspondante du contour du palier (5a) lui

faisant face.

FIG_1

FIG_2

EP 0 351 326 A1

FIG.3

FIG.4

FIG.5

FIG.6

FIG.7

**Office européen des brevets**

**RAPPORT DE RECHERCHE EUROPEENNE**

Numero de la demande

EP 89 42 0235

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 561 735 (LEVOY) <br> * Colonne 2, lignes 67,68; colonne 3, lignes 1-12; figure 5 * <br> --- | 1 | E 05 D 11/10 <br> G 02 C 5/22 |
| A | DE-A-3 404 511 (WÜNSCH) <br> * Page 5, paragraphes 5,6; page 8, paragraphe 4 * <br> --- | 1 | |
| A | US-A-4 506 408 (BROWN) <br> * Résumé; figures 6-12 * <br> --- | 1,2 | |
| A | FR-A-2 379 681 (DELKA) <br> * Page 4, lignes 6-36; figures 2,6,7 * <br> --- | 1,2 | |
| A | DE-A-2 261 704 (FESCURA) <br> ----- | | |

DOMAINES TECHNIQUES
RECHERCHES (Int. Cl.5)

E 05 D
G 02 C

**Le présent rapport a été établi pour toutes les revendications**

| Lieu de la recherche | Date d'achèvement de la recherche | Examinateur |
|---|---|---|
| LA HAYE | 21-09-1989 | NEYS B.G. |